**Europäisches Patentamt**

**European Patent Office**

**Office européen des brevets**

(19)

(11) Veröffentlichungsnummer: **0 054 250**
A2

(12) # EUROPÄISCHE PATENTANMELDUNG

(21) Anmeldenummer: 81110265.6

(22) Anmeldetag: 08.12.81

(51) Int. Cl.³: **B 23 P 15/32**
//B23K31/04

(30) Priorität: 17.12.80 DE 3047599

(43) Veröffentlichungstag der Anmeldung:
23.06.82 Patentblatt 82/25

(84) Benannte Vertragsstaaten:
AT BE CH DE FR GB IT LI NL SE

(71) Anmelder: SORTIMAT Creuz & Co. GmbH
Postfach 250
D-7057 Winnenden (Württ.)(DE)

(72) Erfinder: Amon, Werner
Leutenbacher Strasse 45
D-7057 Leutenbach(DE)

(74) Vertreter: Patentanwälte Dr. Elisabeth Jung Dr. Jürgen
Schirdewahn
Dr. Gerhard Schmitt-Nilson Dr. Gerhard B. Hagen
Dipl.-Ing. Peter Hirsch P.O. Box 40 14 68
D-8000 München 40(DE)

(54) **Verfahren und Vorrichtung zum Anbringen einer Hartmetallplatte am Kopf eines Spiralbohrers.**

(57) Die Erfindung bezieht sich auf ein Verfahren zum Anbringen einer Hartmetallplatte in einem Schlitz am Kopf eines Spiralbohrers durch Einstellen des Schlitzgrundes am Spiralbohrer auf eine vorgegebene Höhe und Ausrichten des Schlitzes auf eine vorgegebene Winkelstellung, Einsetzen der Hartmetallplatte im Schlitz unter Festlegung an einem Vorsprung am Kopf des Spiralbohrers und gegebenenfalls Befestigen der im Schlitz festgelegten Hartmetallplatte mittels im Schlitz eingebrachten Hartlots. Das erfindungsgemäße Verfahren sieht hierzu vor, daß der Spiralbohrer unabhängig von seinem Durchmesser in derselben Achslage gehalten wird und daß nach dem Einsetzen der Hartmetallplatte im Schlitz des Bohrerkopfes am radial innenliegenden Rand des Schlitzes punktartig um ein die Hartmetallplatte im Schlitz festlegendes Maß eingekerbt wird. Die Erfindung bezieht sich auch auf eine Vorrichtung zum Ausführen des Verfahrens mit einem an verschiedene Arbeitsstationen taktweise vorbeibewegbaren Führungselement mit Aufnahmelöchern, durch die Spiralbohrer in vertikaler Lage steckbar sind, mit einem höheneinstellbaren Auflager für die Schaftenden der im Führungselement eingesteckten Spiralbohrer, mit einer am Schaft des Spiralbohrers nachgiebig angreifenden Halterung, mit einer in den Schlitz am Bohrerkopf bei bestimmter Winkelstellung desselben einrastenden, die Einspannkraft des Halters überwindenden und in vorbestimmter Winkellage abstoppbaren Dreheinrichtung, mit einem Sortierkessel zum lagerichtigen Zuführen von Hartmetallplatten über eine Förderschiene, mit einer Einlegeeinrichtung zum Einsetzen einer im Einlaufstück der Förderschiene bereitstehenden Hartmetallplatte in den Schlitz am Bohrerkopf und gegebenenfalls mit einer Hartlötstation. Die Vorrichtung gemäß der Erfindung sieht hierbei vor, daß die Halterung ein achskonstantes und radial nachgiebiges prismatisches Spannfutter oder Dreibackenfutter ist und daß im Takt hinter der Einlegestation eine auf den radial inneren Rand des Schlitzes im Bohrerkopf (46) ausgerichtete, vorzugsweise beidseitige (erste) Kerbeinrichtung (Wirkachsen 186) angeordnet ist.

FIG.6

0054250

Q 867 M1

" Verfahren und Vorrichtung zum Anbringen einer Hartmetall-
·platte am Kopf eines Spiralbohrers "

Die Erfindung befaßt sich mit der Herstellung von sogenannten
Hartmetallbohrern, z.B. Steinbohrern. Bei derartigen Bohrern
wird in der Stirnseite des Bohrerkopfes ein Durchgangsschlitz
ausgespart, in dem eine Hartmetallplatte eingelegt und
anschließend durch Hartlöten befestigt wird.

Handelsübliche Hartmetallbohrer dieser Art, auf welche sich
die Erfindung bezieht, haben einerseits sehr unterschiedliche
Schaftlängen. Am gebräuchlichsten sind Schaftlängen zwischen
85 und 270 mm. Andererseits haben derartige Hartmetallbohrer
auch sehr unterschiedliche Durchmesser, üblicherweise von
5 bis 12 mm. Die Formate der in den Bohrerkopf einzusetzenden
Hartmetallplatten (Breite, Höhe und Stärke) richten sich nach
dem Bohrerdurchmesser. Mit steigendem Bohrerdurchmesser nimmt
auch die Stärke der Hartmetallplatten ebenso wie ihre Querabmessung und Höhe zu.

Der weltweite Bedarf an derartigen Hartmetallbohrern ist relativ klein. Es besteht daher ein Bedürfnis, zum Anbringen
einer Hartmetallplatte in einem Schlitz am Kopf eines Spiralbohrers solche Verfahren und Vorrichtungen bereitzustellen,
mit denen man zuverlässig und einfach mit geringer Umrüstzeit
das ganze Spektrum üblicher Bohrergrößen, und gegebenenfalls
auch noch Sondergrößen, selbsttätig montieren kann. Der Erfindung liegt die Aufgabe zugrunde, diesem Bedürfnis bestmöglich Rechnung zu tragen.

Bekannte Montagemaschinen für diesen Zweck leiden darunter,
daß man entweder nur ein bis zwei Bohrergrößen mit derselben
Maschine überhaupt herstellen kann oder sehr lange Umrüstzeiten von einer Stunde und mehr benötigt. Der Erfindung liegt
daher auch die Zielsetzung zugrunde, neben der Eignung für
alle üblichen Bohrergrößen auch noch minimale Umrüstzeiten
bei Umstellung von einer Bohrergröße auf die andere zu ermöglichen.

Die der Erfindung zugrunde liegende Gattung (Oberbegriffe
der Ansprüche 1 und 7) geht aus von einem internen Stand
der Technik der Anmelderin, mit welchem höchstens zwei unterschiedliche Bohrergrößen an derselben Montagemaschine ohne
längere Umrüstzeiten montierbar sind. Nach diesem internen
Stand der Technik ist ein dauermagnetisches einseitiges
Prisma zur Halterung der magnetisch angezogenen Spiralbohrer vorgesehen. Da sich hierbei die Achslage bei änderndem Durchmesser des Spiralbohrers auch in radialer Richtung verschiebt, werden alle Stationen je nach Bohrerdurchmesser nachgestellt. Die Höhe des Schlitzgrundes der
Bohrer wird durch einen relativ langsam in der Höhe verstellbaren Auflageteller für die Schaftenden der Bohrer
eingestellt. Die Hartmetallplatten rutschen vom Einlaufstück
einer von einem Sortierkessel zufördernden Führungsschiene
teils unter der Schwerkraft, teils unter Nachdruck an den
Montageort im Schlitz des Bohrerkopfes. Die Winkeleinstellung
des Bohrerkopfes für die Einlegung der Hartmetallplatte erfolgt mittels einer schraubenzieherartigen Dreheinrichtung,
die unabhängig von dem Format des Bohrers bei Eingriff im Schlitz
immer gegen dasselbe magnetostatische Feld des Permanentmagneten wirkt.
Um die Hartmetallplatte im Schlitz des Bohrers vor dem Lötvorgang festzulegen, hat man in einem Vorbereitungsschritt
noch vor dem Montagevorgang entweder einen Grat am Schlitz
angeschliffen oder den Schlitz mit Untermaß relativ zum
Hartmetallplättchen gefertigt. Im erstgenannten Fall fehlt es an wünschenswerter Präzision, so daß einmal die Plättchen zu lose sitzen und das andere Mal sich beim Einsetzen
verklemmen. In beiden Fällen bildet der quer verlaufende
Grat ein Hindernis für das Einfließen des Hartlots. Wenn
hingegen mit Untermaß des Schlitzes gearbeitet wird, spreizt
sich der Bohrkopf bei Einsetzen der Hartmetallplatte. Infolge der relativ großen Toleranzen ergibt sich dabei eine
sehr unterschiedliche Ausbildung des Lötspaltes und damit
auch eine relativ geringe Standzeit der hergestellten Bohrer.
Bei toleranzengenauerer Fertigung kommt es zu unvertretbaren
Herstellungskosten.

Die Erfindung sieht demgegenüber vor, das genannte Verfahren
des internen Stands der Technik gemäß dem Kennzeichen von
Anspruch 1 weiterzubilden. Die Erfindung sieht auch eine
Vorrichtung zum Ausführen des Verfahrens vor, bei der der
gattungsgemäße Stand der Technik gemäß dem Kennzeichen von
Anspruch 7 weitergebildet wird.

Nach der Erfindung wird zunächst sichergestellt, daß durch
die Art der Einspannung des Bohrers unabhängig von der
Bohrerdicke und unabhängig von Dickentoleranzen stets die
gleiche Montageachse des Bohrers eingehalten wird. Dies ermöglicht es, in einfacher und schneller Weise die Formgebung
am Bohrerkopf zum Festlegen der eingesetzten Hartmetallplatte im Schlitz erst während des Montagevorganges vorzunehmen, und zwar durch einen gezielten punktförmigen Einkerbungsvorgang am radial inneren Schlitzende des Bohrerkopfes. Die Einkerbung am radial inneren Ende des Schlitzes des Bohrerkopfes ist gegenüber einer auch denkbaren
Einkerbung nur am radial äußeren Schlitzende des Bohrerkopfes deswegen grundsätzlich vorzuziehen, weil sonst eine
unerwünschte Schrägstellungsorientierung der Hartmetallplatte
im Schlitz relativ zur Drehrichtung entsteht, derart, daß
die Hartmetallplatte überwiegend auf Lot aufgelagert wird.
Die erfindungsgemäße Kerbungsart ermöglicht es, die Hartmetallplatte wenigstens an den radial äußeren Schlitzrändern direkt am Körper des Spiralbohrers abzustützen und trotzdem beidseitig der Hartmetallplatte einen Lötspalt zur sicheren Befestigung der Hartmetallplatte im Spiralbohrer vorzusehen. Dies wird besonders dann begünstigt, wenn die Einkerbung an beiden radial inneren Enden des Schlitzes vorgenommen wird.

Durch die punktförmige Art der Einkerbung anstelle der langgestreckten Gratausbildung des internen Stands der Technik der Anmelderin wird ferner der Fluß des Hartlots in den jeweils gebildeten Lötspalt wesentlich verbessert. Außerdem kommt man mit einem Minimum an Materialverdrängung im Bohrerkopf aus, was auch die Standzeit verbessert. Die Erfindung ermöglicht es somit, die Schlitzbreite mit relativ großen Toleranzen zu fertigen und trotzdem einwandfreie Montageergebnisse zu erhalten. Es versteht sich, daß man übergroße Toleranzen dabei auch vermeiden muß.

Eine Einkerbung am radial äußeren Ende des Schlitzes im Bohrerkopf wird nach der Erfindung vorzugsweise als zusätzliche Maßnahme vorgesehen, einerseits um das Hartmetallplättchen beim Einsetzen schon spielfrei halten zu können und so gegen Verrückung beim Fortrücken zu sichern, andererseits um zusammen mit den radial inneren Einkerbungen eine optimale Stellung des Hartmetallplättchens im Bohrerkopf sicherzustellen. Auch hierbei wird vorzugsweise an beiden Schlitzenden vorgekerbt.

Die Vorkerbung erfolgt zweckmäßig mit horizontaler Wirkungsachse (Vorrichtungsanspruch 10 gemäß Verfahrensanspruch 3), während die eigentliche Befestigungskerbung zweckmäßig mit Wirkachse schräg von oben erfolgt (Vorrichtungsanspruch 8 gemäß Verfahrensanspruch 1), aber auch horizontal erfolgen kann. Man kann dabei, insbesondere beim Vorkerben, mit mehreren als Kerbpunkte dienenden Vorsprüngen am Kerbwerkzeug arbeiten, die übereinander angeordnet sind und von denen je nach Bohrerformat mehrere oder wenigere wirksam werden. Ein Umrüsten der Kerbeinrichtung ist dabei nicht erforderlich.

Das eigentliche Befestigungskerben (Verfahrensanspruch 1) wird auch deshalb erst nach dem Einlegen der Hartmetallplatte im Schlitz am Bohrerkopf vorgenommen, um zu vermeiden, daß während des Einlegevorgangs eine Materialverformung oder gar ein Abschaben von Material des Kerbpunktes erfolgt, wobei im ungünstigsten Fall abgeschabtes Material auf den Schlitzgrund fallen und so die ordnungsgemäße waagerechte Auflage der Hartmetallplatte auf dem Schlitzgrund behindern kann. Bei der Vorkerbung ist dies weniger kritisch, weil eventuell abgedrücktes Material aus dem Schlitz herausfällt. Davon abgesehen ist das Maß der Vorkerbung wesentlich geringer als das Maß der radial innen erfolgenden Endkerbung und daher weit weniger gegen Beschädigung anfällig.

Zweckmäßig wird während des Kerbvorgangs der Scheitel der Hartmetallplatte niedergedrückt, um die Unterseite der Hartmetallplatte plan mit dem Schlitzgrund auszurichten.

Die Umrüstzeit wird weiter reduziert, wenn das die Höheneinstellung des Schlitzgrundes vorgebende Auflager für den Bohrerschaft mit einer Schnellverstelleinrichtung für eine stufenlose Höheneinstellung versehen ist.

Auch die Dreheinrichtung zum Einstellen der Winkelstellung des Schlitzes vor dem Einsetzen der Hartmetallplatte wird nach der Erfindung an sehr unterschiedliche Bohrerdurchmesser dadurch angepaßt, daß während des Drehens des Bohrers zum Zwecke der vorgegebenen Winkelstellung seines Schlitzes die Haltekraft der Halterung in vorgegebener Weise stufenlos reduziert werden kann. Bei unterschiedlichen Schlitzformaten braucht man dann lediglich die Klinge der Dreheinrichtung auszuwechseln, was sehr schnell möglich ist, ohne die Halterung mechanisch verstellen zu müssen.

Es hat sich gezeigt, daß man alle Hartmetallplatten für das ganze Formatspektrum der genannten üblichen Hartmetallbohrer in einem einzigen Sortierkessel lagerichtig sortieren und zufördern kann. Man kann sogar in großem Umfang dieselbe
Führungsschiene benutzen. Es hat sich gezeigt, daß man nur
Führungsschienen mit zwei unterschiedlichen Spurweiten braucht.
Der Grund für die beiden Spurweiten liegt darin, daß die
Stärke von kleinformatigen Hartmetallplatten kleiner als
die Hälfte der Stärke von großformatigen Hartmetallplatten
ist, und es ohne Umrüstung vorkommen könnte, daß bei auf
starke Hartmetallplatten eingestellter Spur dünne Hartmetallplatten nebeneinander zu liegen kommen oder sich gar überholen. Die Umrüstung wird zweckmäßig durch Schnellumtausch
der Führungsschienen vorgenommen, wozu lediglich zwei Klemmschrauben zu bedienen sind. Alternativ könnte man auch die
Spurweite an derselben Führungsschiene verstellbar vorsehen.

Es hat sich ferner als der Zielsetzung der Erfindung dienlich erwiesen, die Hartmetallplatten einzeln zu ergreifen,
über den Schlitz am Bohrerkopf zu führen und dort ohne Aufgabe ihrer Führung in den Schlitz vertikal einzuschieben.

Man kann hierbei mit demselben Greifkopf und auswechselbarem
Greiffutter arbeiten. Das Greiffutter kann hierbei bis zu
drei Funktionen gleichzeitig erfüllen: Die erste Funktion
ist die Anpassung an unterschiedliches Format der Hartmetallplatte. Die zweite Funktion ist die Auswechselung
eines jeweils an das Format angepaßten Auswerferstößels.
Die dritte Funktion ist die Auswechselung des jeweils vom
Format abhängigen Endanschlags im Einlaufstück der Führungsschiene, um die jeweils bereitstehende Hartmetallplatte unabhängig von ihrer Längenerstreckung (entsprechend dem
Bohrerdurchmesser) auf die Einlegeeinrichtung, im vorzugsweise verwendeten Fall also das Greiffutter im Greifkopf,
zentrieren zu können.

Zum Überführen eines bereitstehenden Hartmetallplättchens in
den Greifkopf braucht man dann lediglich noch ein Malteserkreuz umzustellen, ohne hier neue Elemente einfügen zu müssen.

Nach der Erfindung kann man bereits mit recht großer Genauigkeit die Hartmetallplatte im Schlitz des Bohrerkopfes zentrieren. Es empfiehlt sich jedoch zur Herstellung von Hartmetallbohrern noch größerer Güte, die axiale Justierung
der Hartmetallplatte im Schlitz noch in einem abschließenden
Nachjustierungsvorgang selbsttätig zu verbessern. Dabei kann
man auch eventuelle Verrückungen der Hartmetallplatte im
zur hauptsächlichen Befestigung dienenden Kerbvorgang (gemäß
Verfahrensanspruch 1 und Vorrichtungsanspruch 7) korrigieren.

Die so nach der Erfindung unverlierbar im Schlitz am Bohrerkopf angebrachten Hartmetallplättchen können entweder noch
in der Montagemaschine oder in einem anschließenden Lötofen mit dem Hartlot versehen werden. Dies hängt von den
jeweils gestellten Anforderungen ab. Ein gesonderter Lötofen hat den Vorteil einer Entkoppelung von den Montagetaktzeiten. Außerdem wird die Montagemaschine weniger thermisch
belastet.

Im übrigen kann man an einer erfindungsgemäßen Montagevorrichtung alle üblichen Einrichtungen von Montagemaschinen
vorsehen, wie beispielsweise automatische Bohrereinlegung,
automatische Endproduktentnahme, Kontrollstationen für
jeweils ordnungsgemäßen Betriebszustand, wie etwa richtige
Höhe des Schlitzgrundes, Vorhandensein eines Bohrers, Vorhandensein der eingefügten Hartmetallplatte u.dgl.. Vorzugsweise wird die Erfindung auch an einer Schalttellermaschine
verwirklicht, da eine verhältnismäßig kleine Zahl von Arbeitsstationen für den ganzen komplizierten Vorgang erforderlich ist und man damit von einer linearen Montagemaschine, beispielsweise mit einem Förderband als Führungselement, Abstand nehmen kann.

Es hat sich gezeigt, daß bei gleichzeitiger Verwirklichung
aller erfindungsgemäßen Maßnahmen das volle Spektrum üblicher Hartmetallbohrer teils ohne Umrüstzeiten, teils mit
nur geringen Umrüstzeiten von nicht mehr als 20 Minuten

im ungünstigsten Fall montiert werden kann. Aber auch bei teilweiser Verwirklichung der erfindungsgemäßen Maßnahmen erhält man bereits wesentliche Vorteile gegenüber dem Bekannten. Demzufolge wird beispielsweise bereits in der Innenankerbung des Schlitzrandes am Bohrerkopf zum Festlegen der Hartmetallplatte nach deren Einsetzen, gegebenenfalls nach Vorkerbung im beschriebenen Sinne, eine selbständige Erfindungsidee gesehen. Diese erhält jedoch erst mit den anderen erfindungsgemäßen Maßnahmen, insbesondere der vom Bohrerformat invarianten achskonstanten Halterung der Bohrer, ihre besondere Bedeutung für die eingangs erläuterte Hauptaufgabenstellung der Erfindung.

Die Erfindung wird im folgenden anhand schematischer Zeichnungen an einem Ausführungsbeispiel noch näher erläutert. Es zeigen:

Fig. 1    eine Draufsicht auf eine erfindungsgemäße Schalttellermaschine;

Fig. 2    einen vertikalen radialen Schnitt durch die Höheneinstelleinrichtung der Schalttellermaschine gemäß Fig. 1;

Fig. 3    einen vertikalen radialen Schnitt durch die Halterung der Schalttellermaschine gemäß Fig. 1 mit Veranschaulichung der unterschiedlichen Längen- und Durchmesserformate üblicher, mit derselben Maschine montierbarer Hartmetallbohrer;

Fig. 3a   eine Draufsicht auf die Halterung von Fig. 3 und

Fig. 3b   einen horizontalen Querschnitt durch dieselbe Halterung;

Fig. 4    einen vertikalen radialen Schnitt durch die zum Ausrichten des Schlitzes eines Spiralbohrers dienende Dreheinrichtung der Schalttellermaschine gemäß Fig. 1;

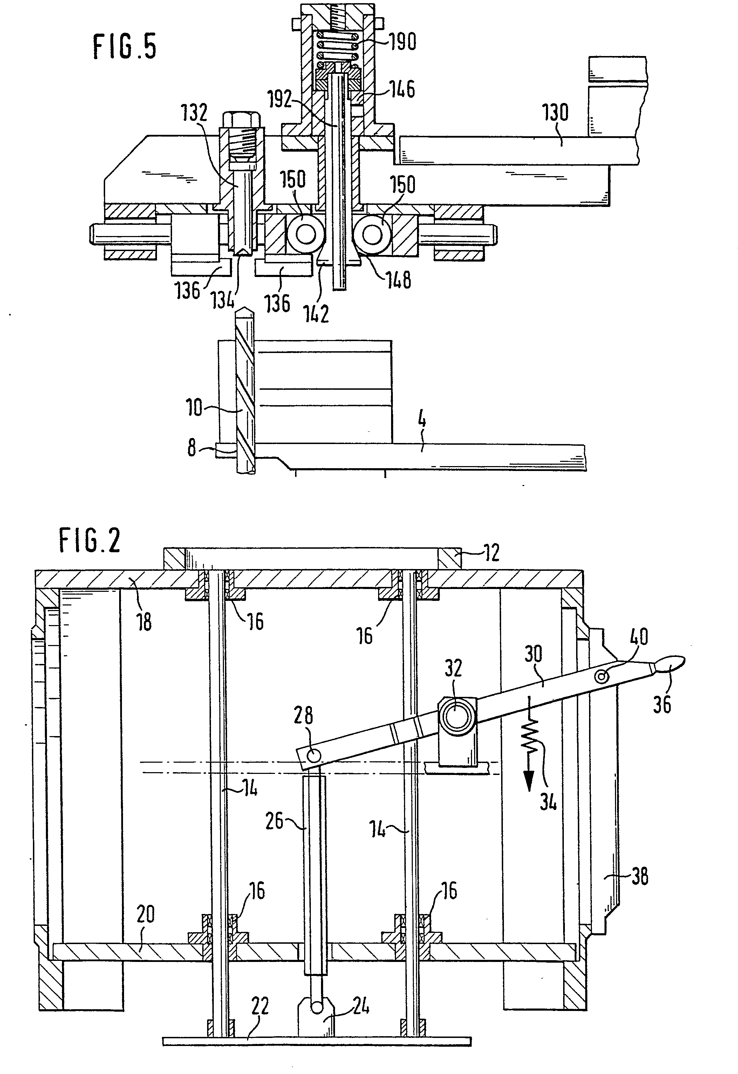

Fig. 5    einen vertikalen radialen Schnitt durch eine horizontal wirksame Kerbeinrichtung zum Vorkerben mit einer in

Takt vorhergehenden Station zum Fühlen der richtigen
Winkelstellung des ausgerichteten Spiralbohrers;

Fig. 6   eine schematische Darstellung des Vorkerbens und endgültigen Festkerbens der im Schlitz am Bohrerkopf
niederdrückbaren Hartmetallplatte;

Fig. 6a  eine Draufsicht auf die Vorrichtung gemäß Fig. 6;

Fig. 6b und Fig. 6c
zwei mögliche Montagezustände der Hartmetallplatte
im Schlitz am Bohrerkopf;   und

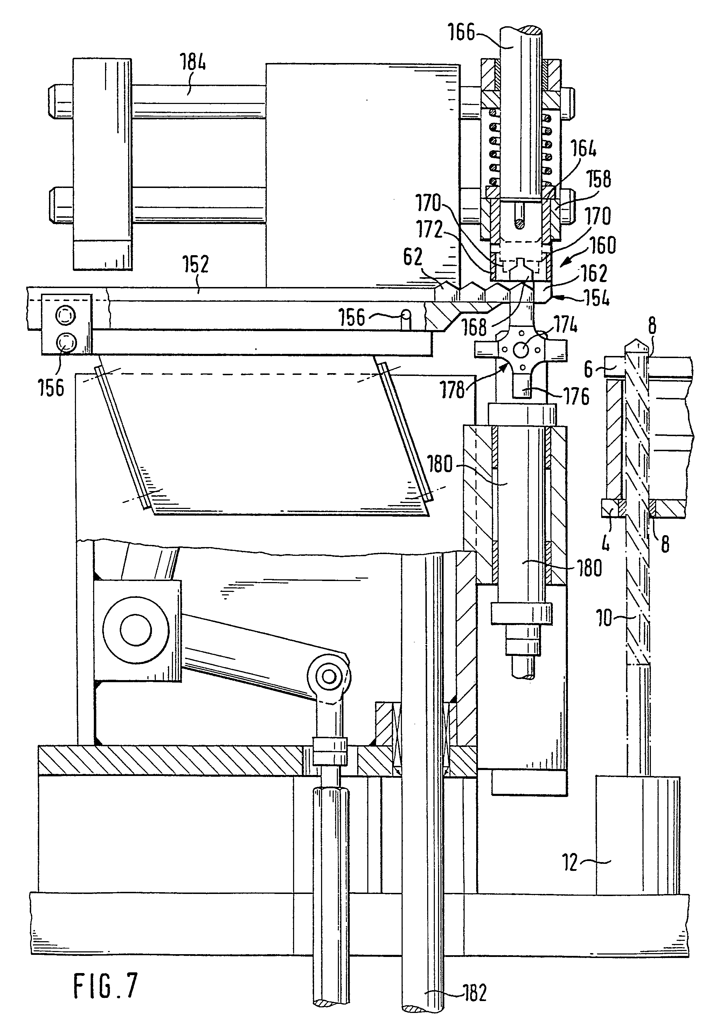

Fig. 7   einen vertikalen radialen Schnitt durch die Einlegeeinrichtung.


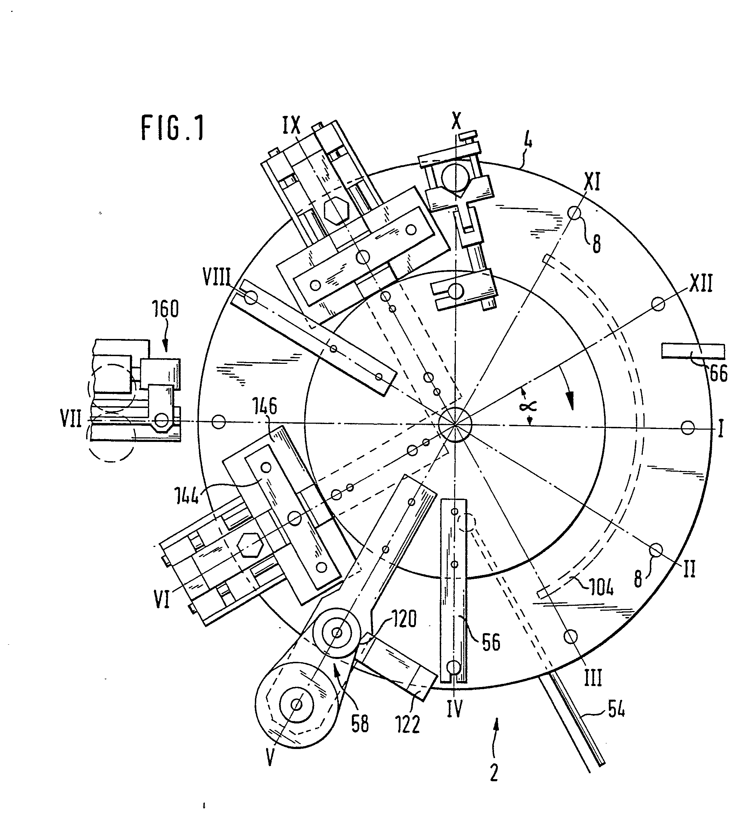

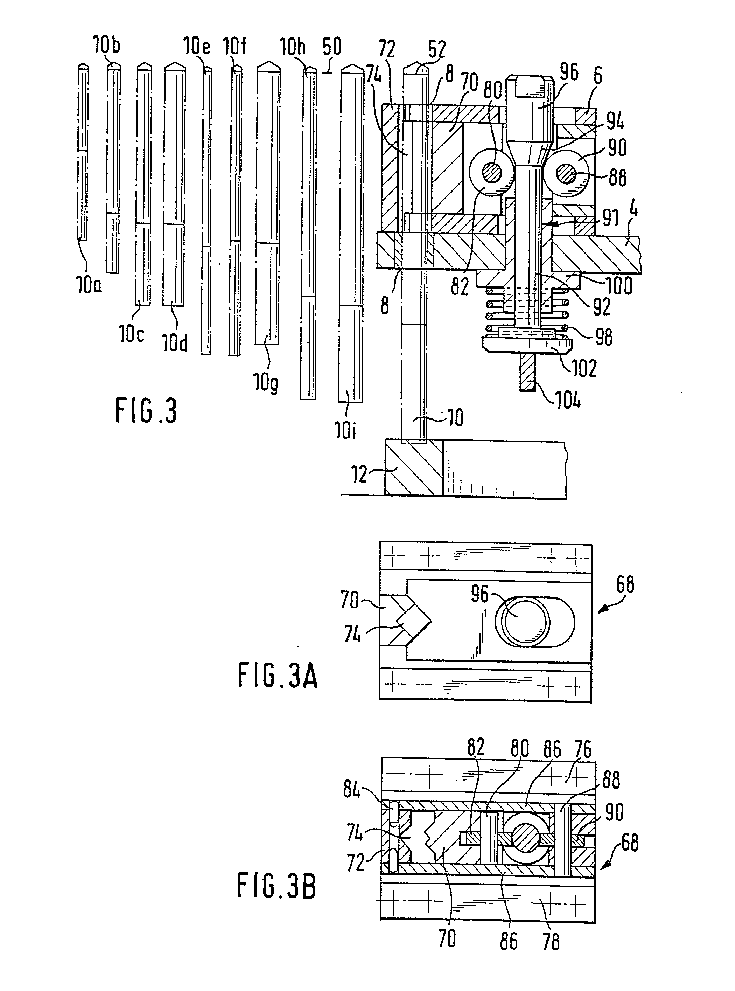

Eine Schalttellermaschine 2 weist einen Schaltteller 4 auf,
der gemäß dem Pfeil in Uhrzeigersinn taktmäßig jeweils um
einen Zentriwinkel $\alpha$ mittels eines nicht dargestellten Rundschalttisches schaltbar ist. Der Schaltteller 4 ist zusammen
mit einem sich horizontal mit Abstand über ihm erstreckenden
weiteren Tellerboden 6 doppelbödig ausgebildet. Sowohl im
Schaltteller 4 als auch im Tellerboden 6 sind als Werkstückaufnahmen über den Umfang verteilte vertikale Bohrungen 8 ausgebildet, in
die jeweils ein Spiralbohrer 10 mit etwas Spiel vertikal einsteckbar ist. In Fig. 3 ist eine Auswahl aus einem typischen
Sortiment üblicher Spiralbohrerformate 10a bis 10i gezeigt,
wobei, wie dargestellt, sowohl schmale Spiralbohrer kurzer
Länge (10a), schmale Spiralbohrer großer Länge (10e und 10h),
breite Spiralbohrer kleiner Länge (10d) als auch breite
Spiralbohrer großer Länge (10i), ebenso wie Mischformen,
vorkommen. Alle diese üblichen Spiralbohrer, aber
auch noch verschiedene im Formatumfeld liegende Sonderformen,
sind mit der Schalttellermaschine 2 gemäß Fig. 1 montierbar,
gegebenenfalls nach sehr kurzen Umrüstzeiten.

An den Stationen I, II und III der Schalttellermaschine 2
werden die Spiralbohrer 10 einzeln jeweils in ein Lochpaar 8 des Schalttellers 4 und des darüberliegenden Tellerbodens 6 eingesteckt, und zwar mit dem Schaft nach unten voraus, bis der Schaft des Spiralbohrers auf einem ringförmigen Auflagerteller 12 aufliegt. An dem Auflagerteller 12 sind vier an den Ecken eines gedachten Quadrats angeordnete Führungssäulen 14 befestigt, die durch Kugelhülsen 16 in der Tischplatte 18 und der Grundplatte 20 der Schalttellermaschine 2 stufenlos gleitbar verschieblich sind. Unter der Grundplatte 20 sind die Führungssäulen 14 miteinander durch einen Endring 22 verbunden, der ebenso wie der Auflagerteller 12 waagerecht verläuft. An zwei gegenüberliegenden Punkten des Endrings 22 ist je ein nach oben ragender Gabelkopf 24 vorgesehen, an denen jeweils telekopisch längenverstellbare Lenker 26 angelenkt sind, die ihrerseits über Gelenkköpfe 28 an den beiden Gabelenden einer Schwenkgabel 30 angelenkt sind. Die Schwenkgabel 30 bildet einen doppelarmigen Hebel, dessen Gelenkpunkt 32 ortsfest am Maschinengestell angebracht ist. Die Schwenkgabel 30 ist normalerweise durch eine Zugfeder 34 nach unten gespannt, welche als Gewichtsausgleich für die von der Schwenkgabel 30 verstellbaren Elemente ausgelegt ist. Der Handgriff 36 am freien Ende der Schwenkgabel 30 dient zur manuellen Höheneinstellung des Auflagertisches 12 über das dazwischenliegende Hebelgestell. Der mit dem Handgriff 36 verbundene freie Arm der Schwenkgabel 30 läuft zwischen zwei Klemmleisten 38, von denen eine in Fig. 2 zu sehen ist. In einer stufenlos frei wählbaren Höhenstellung des freien Arms der Schwenkgabel 30 innerhalb der Klemmleisten 38 sind diese an der Klemmstelle 40 gegeneinander mittels einer äußeren, nicht dargestellten Klemmeinrichtung klemmbar. In der eingeklemmten Stellung ist die Höhenlage des Auflagertellers 12 vorgegeben. Diese wird so gewählt, daß die aus den Stationen I, II und III austretenden Spiralbohrer bis zur Entnahme von der Schalttellermaschine 2 konstante Höhe des Grundes ihres Schlitzes im Bohrerkopf haben.

Der Spiralbohrer 10 hat nämlich jeweils einen Bohrerschaft 42, eine Bohrerspirale 44, die in einem Bohrerkopf 46 endet, sowie in der Stirnseite desselben einen quer durch die Stirnseite
zentrisch verlaufenden Schlitz 48.

Wegen des Verlaufs der Bohrerspirale hat dieser Schlitz vier
äußere Ränder, von denen je zwei radial innenliegend und zwei
radial außenliegend angeordnet sind.

Mit der Wahl einer bestimmten Höheneinstellung des Auflagertellers 12 wird jeweils nur eine bestimmte Höhe für ein bestimmtes Spiralbohrerformat eingestellt. Bei anderen Formaten liegt der Schlitzgrund jeweils höher oder tiefer. Bei
Umrüstung der Maschine auf ein anderes Bohrerformat bleibt
in jedem Fall die Höheneinstellung des Grundes des Schlitzes
des betreffenden Spiralbohrers gleich. Die Anpassung wird
lediglich durch höhere oder tiefere Einstellung der Lage
des unteren Endes des Bohrerschaftes durch entsprechende Einstellung des Auflagertellers 12 angepaßt. Dementsprechend
sind in Fig. 3 alle Spiralbohrer unterschiedlichen Formats
so dargestellt, daß jeweils ihr Schlitzgrund konstante Höhe
hat. Das führt auch dazu, daß im einzelnen der Bohrerkopf
mehr oder minder weit hochsteht relativ zum in der Schalttellermaschine 2 unabhängig vom Bohrerformat konstanten Niveau 50 des Schlitzgrundes 52.

In den Stationen I, II und III muß die Bedienungsperson
lediglich sicherstellen, daß jede  als Werkstückaufnahme
dienende Bohrung 8 jeweils durch einen Spiralbohrer besetzt
ist. Durch die Einlegemöglichkeit an drei aufeinanderfolgenden Stationen kann die Bedienungsperson etwas weniger belastet vom Streß des Maschinentaktes arbeiten. Im Notfall kann
die Bedienungsperson eine Not-Aus-Klappe 54 betätigen und
so die Schalttellermaschine stillsetzen. Die Not-Aus-Klappe 54
wird auch automatisch betätigt, wenn ein Spiralbohrer zu
weit aus der jeweiligen Werkstückaufnahme herausragt, sei es
durch nicht vollständige Einführung in seine Bohrung 8, sei
es durch Verwechslung mit einem längeren Bohrer.

In einer Station IV in Schaltrichtung hinter der Not-Aus-Klappe 54 ist eine Taststation 56 vorgesehen, welche im Wege einer Längenmessung die Höhe des eingestellten Schlitzgrundes 52 des ankommenden Spiralbohrers 10 in drei Klassen, nämlich Normaleinstellung, überhöhte Stellung oder zu niedrige Stellung, klassifiziert. Nur im Falle der Normaleinstellung erfolgt eine Betätigung der nachfolgenden Stationen, während anderenfalls der betreffende Spiralbohrer einfach durchläuft und am Ende gesondert entnommen wird.

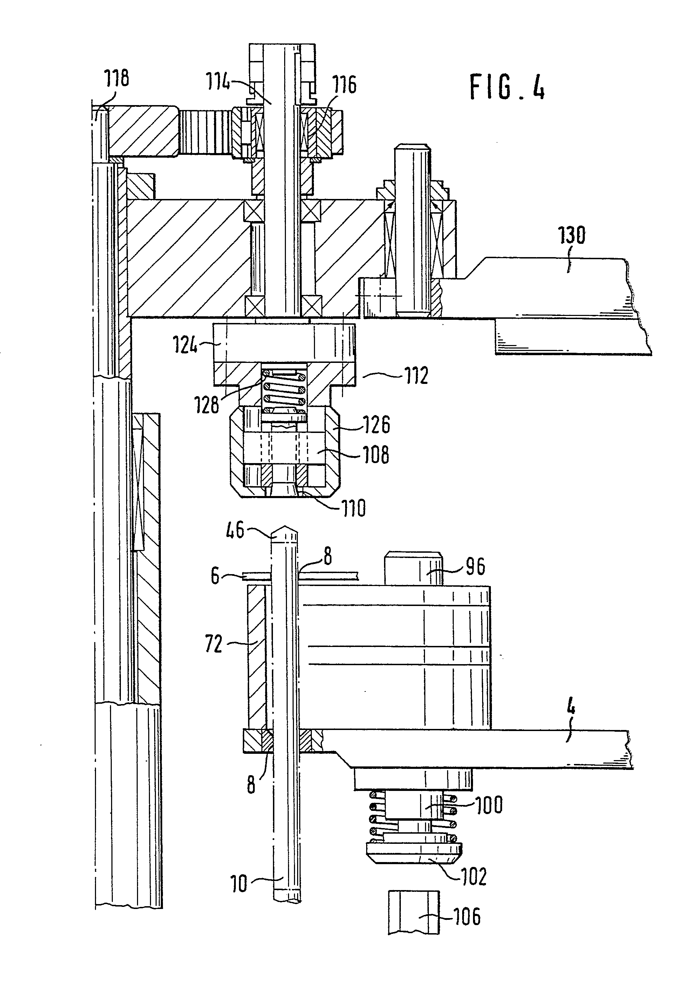

In der nächsten Station V ist eine Ausdrehstation 58 einer Dreheinrichtung 112 vorgesehen, die im einzelnen nachfolgend im Zusammenhang mit Fig. 4 beschrieben wird und dazu dient, den auf dem konstanten Niveau 50 seines Schlitzgrundes 52 in der Schalttellermaschine 2 umlaufenden Spiralbohrer in eine vorgegebene Winkelstellung seines Schlitzes 48 einzustellen.

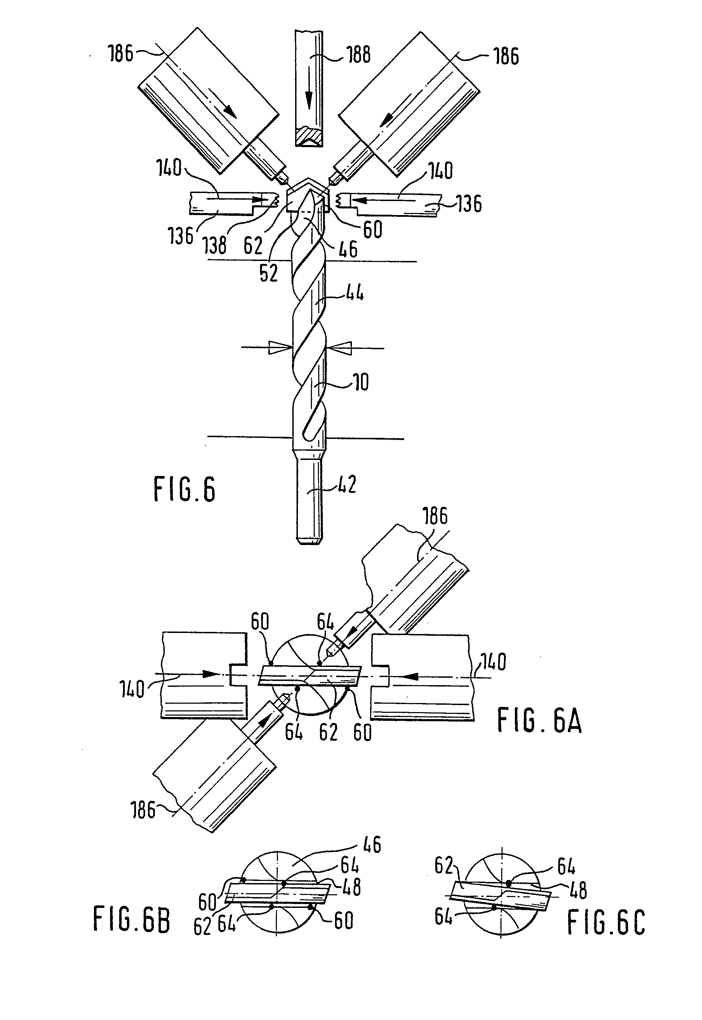

In der darauffolgenden Station VI werden zeitlich leicht nacheilend zwei Arbeitsgänge vorgenommen: Im zeitlich ersten Arbeitsgang wird die richtige Winkeleinstellung des Schlitzes 48 im ankommenden Spiralbohrer 10 kontrolliert. Im nacheilenden zweiten Arbeitsgang erfolgt von beiden Seiten her in horizontaler Wirkrichtung eine, gegebenenfalls in vertikaler Anordnung übereinander mehrfache, punktförmige Einkerbung an den jeweils radial äußeren Schlitzrändern. Die betreffenden Kerbstellen sind in Fig. 6, Fig. 6a und Fig. 6b mit 60 bezeichnet.

In der anschließenden Station VII wird eine Hartmetallplatte 62 in den Schlitz 48 so eingelegt, daß ihr flacher unterer Rand bündig flach auf dem Schlitzgrund 52 aufliegt.

In der nächsten Station VIII erfolgt eine punktförmige einfache Einkerbung an jedem der beiden radial innenliegenden Ränder des Schlitzes 48, wodurch in Fig. 6 bis Fig. 6c jeweils zwei radial innenliegende Einkerbungen 64 entstehen.

Wenn die Vorkerbung mit den Einkerbungen 60 ausgelassen ist, entsteht das Kerbungsbild gemäß Fig. 6c, sonst
das der Fig. 6, 6a oder 6b.

In der nächsten Station IX werden die an der Station VII im
Schlitz 48 eingelegten und an der Station VIII in diesem
festgelegten Hartmetallplatten 62 gegen die Festhaltekraft
der Einkerbungen 64 und gegebenenfalls 60 axial nachjustiert.

An der nächsten Station X wird oben auf den mit der festgelegten Hartmetallplatte 62 bereits versehenen Bohrerkopf etwas
Kleb- oder Bindemittel, gegebenenfalls auch schon Lötpaste,
aufgebracht, um dann den fertig montierten Hartmetallbohrer
an einer der Stationen XI oder XII entnehmen zu können.
Nach der Entnahme kann dann noch beispielsweise ein Hartlotring von Hand aufgelegt und der so präparierte Hartmetallbohrer in einen gesonderten, nicht gezeigten Lötofen zum
Hartlöten der Hartmetallplatte im Spiralbohrer verbracht
werden.

Zwischen den Stationen XII und I ist noch eine Entnahmekontrolle 66 angeordnet.

Es versteht sich, daß das Einlegen des Spiralbohrers an den
Stationen I bis III und das Entnehmen an den Stationen XI
und XII in bekannter Weise auch automatisiert werden kann,
wobei man dafür jeweils nur eine Station benötigen würde. Stattdessen könnte man bedarfsweise die verbleibenden Stationen,
gegebenenfalls auch unter Vervielfachung der zur Verfügung
stehenden Stationen, als selbsttätige Lötstationen einsetzen.

Mit dem Schaltteller 4 laufen zwischen jedem als Werkstückaufnahme dienenden vertikalen Bohrungspaar 8
achskonstante prismatische Spannfutter 68 um, an deren Stelle
auch nicht dargestellte Dreibackenfutter treten können.

Das prismatische Spannfutter 68 weist zwei Spannprismen 70
und 72 auf, die eine prismatische Aufnahmeöffnung 74 veränderlicher Weite, jedoch konstant bleibender Achse beschreiben. Die Spannprismen 70 und 72 sind zwischen zwei vertikalen Führungsplatten 76 und 78 gleitend verschieblich geführt.

Das radial innenliegende Prisma 70 hat an seiner Rückseite eine Lagerwelle 80 für einen als Rolle dienenden Kugellagerring 82.

Das radial außenliegende Prisma 72 hat auch eine Lagerwelle 84. Diese ist in einer Doppelbrücke 86 gelagert, welche das innenliegende Prisma 70 umgreift und an ihrem freien Ende eine weitere Lagerwelle 88 für einen wiederum als Rolle dienenden Kugellagerring 90 trägt.

Die beiden Kugellagerringe 82 und 90 laufen zu beiden Seiten einer vertikal verschieblichen Betätigungsstange 91, welche einen relativ schmalen unteren Schaftteil 92, ein konisches Übergangsstück 94 sowie einen relativ dickeren Kopfteil 96 aufweist. Zur Steuerung dienen nur die Abschnitte 92 und 94.

Die beiden Spannprismen 70 und 72 sind normalerweise durch eine Druckfeder 98 zwischen einer am Schaltteller 4 befestigten vertikalen Gleitführung 100 und einer Verbindungsscheibe 102 am unteren Ende der Betätigungsstange 91 aufeinander zu vorgespannt. Dabei drückt die Druckfeder 98 die Betätigungsstange 91 nach unten, so daß das konische Übergangsstück 94 die beiden Kugellagerringe 82 und 90 im gleichen Maße nach außen drückt und damit die beiden Spannprismen 70 und 72 im gleichen Maße aufeinander zu spannt.

Das Spannprisma wird zwangsläufig geöffnet, wenn die Betätigungsstange 91 nach oben angehoben wird und damit anstelle des Übergangsstücks 94 der schmalere Abschnitt 92 der Betätigungsstange 91 zwischen den beiden Kugellagerringen 82 und 90 zu liegen kommt und dadurch die beiden Spannprismen unbelastet werden. Hierzu kommt die Verbindungsplatte 102 im Taktbereich zwischen den Stationen XI und III auf einer die Betätigungsstange anhebenden Rampe 104 (siehe auch Fig. 1)
zur Auflage, so daß eine freie Einlegung der Spiralbohrer
in die Schalttellermaschine 2 und auch wieder eine freie Entnahme aus dieser möglich werden.

Die als prismatisches Spannfutter 68 ausgebildete
Halterung steht unter der Vorspannung der Druckfeder 98
bald nach dem Austritt des Spiralbohrers aus der Station III
bis kurz vor Eintritt in die Station XI.

Mit der Verbindungsplatte 102 wirkt an der Station V gemäß
Fig. 4 anstelle der vorher erwähnten Rampe 104 der Kopf 106
eines im Druck stufenlos einstellbaren pneumatischen Betätigungsstößels zusammen. Dadurch wird es möglich, die Einspannkraft der Druckfeder 98 stufenlos in vorgewählter Weise an
der Station V zu reduzieren. Dadurch kann eine Anpassung der
gewünschten reibschlüssigen Verbindung zwischen dem Spiralbohrer 10 einerseits und den Spannprismen 70 und 72 andererseits erreicht werden, wenn die Schneide 108 mit trompetenförmiger Eingangsführung 110 der Dreheinrichtung 112 in Eingriff mit dem im Einspannprisma gehaltenen Bohrerkopf 46
des Spiralbohrers 10 kommt. Die Schneide 108 ist am Ende
einer Antriebswelle 114 angebracht, die über eine Rutschkupplung 116 mit einer Getriebewelle 118 eines nicht angezeigten
Antriebs zusammenwirkt. Die Verbindung zwischen Getriebewelle 118 und Antriebswelle 114 erfolgt entweder in dargestellter Weise über Zahnriemen oder alternativ über ein
Zahnrad.

Es kann davon ausgegangen werden, daß die Schneide 108 nach
höchstens wenigen Umdrehungen in den Schlitz 48 am Bohrerkopf 46 eingreift. Nach einer bestimmten Zahl von Umdrehungen
greift eine Sperrklinge 120 an einem pneumatischen Betätigungszylinder 122 (Fig. 1) an einem mit der Antriebswelle 114 umlaufenden Anschlag 124 an und bringt damit die Antriebswelle 114 abrupt in einer vorgegebenen Winkelstellung zum
Stillstand, wobei die Rutschkupplung 116 durchrutscht.

Die Klinge 108 ist in einem Kopfteil 126 durch eine Druckfeder
128 abgefedert.

Der Kopfteil 126 der Dreheinrichtung 112 kommt dadurch mit
dem Bohrerkopf 46 taktweise zum Eingriff, daß die ganze Dreheinrichtung 112 von einem Hubteller 130 im Takt auf- und
abwärts bewegt wird. Der Hubteller 130 steuert auch die entsprechenden Auf- und Abwärtsbewegungen der übrigen Stationen,
die ebenso mit dem Hubteller 130 verbunden sind.

Am Hubteller 130 ist dementsprechend auch ein an der Station VII zunächst zur Wirkung kommender Taststift 132 vertikal gefedert und gegen Verdrehung gesichert angebracht,
welcher eine Tastklinge 134 aufweist, die bei Abwärtshub des
Hubtellers 130 in den ausgerichteten Schlitz 48 am Bohrerkopf 46 eingreift. Wenn der Taststift 132 nicht eingreift,
wird ein Störungssignal gegeben und die nachfolgenden Stationen werden stillgelegt. Wenn der Taststift 132 hingegen
eingreift, dient er als Verdrehsicherung des Bohrerkopfes 46
beim nachfolgenden Vorkerben an derselben Station VI.

Hierzu werden zwei diagonal gegenüberliegende Kerbbacken 136
mit mehreren übereinanderliegenden Kerbpunkten 138 (Fig. 6)
mit horizontaler Wirkungslinie gemäß dem horizontalen Doppelpfeil 140 in Fig. 6 in derselben Stellung des Hubtellers 130,
in welcher die Tastklinge 134 des Taststiftes 132 am Grund
des Schlitzes angreift, pneumatisch in Eingriff mit den radial
innenliegenden Rändern des Schlitzes am Bohrerkopf gebracht.
Zum zentrischen Betätigen der Kerbbacken 136 dient wiederum
eine Betätigungsstange 142, die durch pneumatische Zylinder 144
über eine Brücke 146 vertikal verschiebbar ist und ein konisches Übergangsstück 148 aufweist, welches in derselben Weise
über Kugellagerringe 150 die Kerbbacken 136 steuert, wie
die Kugellagerringe 82 und 90 die beiden Spannprismen 70
und 72 steuern.

An der Station VII mündet das Einlaufstück 154 einer von
zwei wahlweise durch Klemmschrauben 156 einsetzbaren Führungsschienen 152 axial genau unter der Wirkachse des Greifkopfes 158 der Einlegestation 160. Je nach der Längenabmessung jeder in Längsrichtung anstehenden Hartmetallplatte 62
läuft die bereitstehende vorderste Hartmetallplatte gegen einen
Endanschlag 162, der Teil eines auswechselbaren Greiffutters
164 im Greifkopf 158 ist. Zu dem Greifkopf 158 gehört auch
noch ein in diesem axial verschiebbarer Auswerfstößel 166.
Das Greiffutter weist eine zur oberen Kontur der Hartmetallplatte komplementäre Aussparung 168 auf. Diese ist mit seitlich bis zum Grund der aufgenommenen Hartmetallplatte herabreichenden Führungen 170 versehen. Außerdem klemmt ein Spannband 172 zwei an den Flachseiten angreifende Backen des
Spannfutters in reibschlüssigen Eingriff mit der aufgenommenen Hartmetallplatte.

Zentral unter dem Greifkopf 158 ist die Achse 174 eines
Malteserkreuzes angeordnet, welches vier Arme 176 aufweist,
die unterschiedlich breit entsprechend der Längserstreckung
und unterschiedlich weit entsprechend der Dicke der jeweils
am Einlaufstück in den Greifkopf zu überführenden Hartmetallplatte ausgebildet sind. Je nach dem Format der zu montierenden Hartmetallplatte wird ein passender Arm 176 des Malteserkreuzes wahlweise vertikal nach oben gestellt. Zum Einführen
in den Greifkopf ist das ganze Malteserkreuz 178 vertikal
mittels eines pneumatischen Hubzylinders 180 verschiebbar.

Der ganze Greifkopf 158 ist nach Ergreifen der jeweiligen
Hartmetallplatte durch eine Schubstange 182 anhebbar und dann
längs horizontaler Rundführungen 184, die den Greifkopf 158 gegen
Verdrehung sichern, radial nach innen verstellbar, bis die Achse des
Greiffutters 164 mit der Achse des an der Station VII in der Werkstückaufnahme befindlichen Spiralbohrers fluchtet.

Dort wird der Greifkopf 158 vertikal abgesenkt, bis die aufgenommene Hartmetallplatte mit ihrem unteren Ende am Grund 52
des Schlitzes im Bohrerkopf zur Auflage kommt. Bis zum Auflagezeitpunkt wird dabei die Hartmetallplatte an ihren beiden Schmalseiten durch die Führungen 170 geführt, während die Klemmbacken etwas früher öffnen. Die Rückwärtsbewegung erfolgt im entsprechenden Gegentakt. Beim Einlegen der Hartmetallplatte muß gegebenenfalls die Klemmkraft der Vorkerbungen 60 überwunden werden.

In der nachfolgenden Station VIII erfolgt beidseitig über die gemäß Fig. 6 schräg von oben unter 45° gegenüber der Vertikalen angreifenden Wirkungslinien 186 die Einkerbung an den radial innenliegenden Enden des Schlitzes im Bohrerkopf, um die eingelegte Hartmetallplatte endgültig festzuhalten. Der Kerbvorgang ist bis auf die andere Ausrichtung der Wirkungslinie entsprechend dem Vorkerbvorgang, der früher geschildert wurde, gleich, mit der einen Ausnahme, daß während der Hauptkerbung mittels eines Niederhalterstößels 188 Druck auf den Scheitel der eingelegten Hartmetallplatte ausgeübt wird.

Beim Vorkerben kann man stattdessen mittels eines durch eine Druckfeder 190 vorgespannten Klemmstiftes 192 auf die Spannprismen 70 und 72 der Halterung Druck ausüben und diese so gegen ein ungewolltes Öffnen blockieren.

Der Niederhalterstößel 188 hat zugleich die Funktion einer Einlegekontrolle der Hartmetallplatte im Bohrerkopf.

An der Station IX schließlich ist eine der Station V analoge Station aufgebaut, an der lediglich anstelle der Kerbbacken 136 glatte Ausrichtbacken vorgesehen sind. Hierdurch wird die Hartmetallplatte auf genaue Achslage nachjustiert.

Je nach den besonderen Anforderungen erreicht man mit und ohne Vorkerbung die in Fig. 6b oder in Fig. 6c gezeigte Anordnung der Hartmetallplatte 62 im Schlitz 48 am Bohrerkopf 46. Bei Vorkerbung kann man die Hartmetallplatte 62 in Abstand zu beiden Seitenwandflächen des Schlitzes zwischen je zwei Kerbpunktenpaaren 60 und 64 halten. Dadurch wird der Lötspalt auf beiden Seiten der Hartmetallplatte im Idealfall gleich und gleichmäßig über die ganze Breite des Bohrerkopfes.

Alternativ kann man ohne Vorkerbung gemäß Fig. 6c eine im Schlitz schrägstehende Anordnung der Hartmetallplatte 62 erreichen, wobei die Hartmetallplatte an den beiden Schlitzrändern dort direkt abgestützt ist, wo sonst die äußeren Vorkerbpunkte 60 als Abstandhalter vorgesehen sind. Hierbei erhält man auch zwei gleichartige Lötspalte, die jedoch jeweils dreieckförmigen Querschnitt haben und sich diagonal mit ihren weitesten Stellen gegenüberliegen. Die direkte Abstützung stellt dabei ein lotfreies unmittelbares Widerlager gegen die auf die Hartmetallplatte beim Drehen des Spiralbohrers in seiner vorgegebenen Drehrichtung einwirkenden Drehmomente dar.

In der Station IX wird mit der im Aufbau der horizontalen Vorkerbeinrichtung entsprechenden Ausrichteinrichtung natürlich nicht, wie beim Kerben, auf den radial außenliegenden Rand des Schlitzes im Bohrkopf eingewirkt, sondern unter Ausübung einer beidseitigen axialen Zentrierkraft auf die Schmalseiten der Hartmetallplatte. Die Ausrichtkraft ist dabei so zu wählen, daß die Klemmkraft der Einkerbungen im Bohrerkopf, an denen die Hartmetallplatte im Schlitz beim Zentrieren etwas quer in Schlitzrichtung verschoben wird, überwunden wird. Man muß dabei darauf achten, daß bei diesem Zentriervorgang die Unterseite der Hartmetallplatte in planer Anlage an dem Schlitzgrund verbleibt, die Hartmetallplatte also nicht verkantet wird.

**ELISABETH JUNG** DR. PHIL., DIPL.-CHEM
**JÜRGEN SCHIRDEWAHN** DR. RER. NAT., DIPL.-PHYS.
**GERHARD SCHMITT-NILSON** DR.-ING.
**GERHARD B. HAGEN** DR. PHIL. —
**PETER HIRSCH** DIPL.-ING.

PATENTANWÄLTE
EUROPEAN PATENT ATTORNEYS

8000 MÜNCHEN 40. **0054250**
P. O. BOX 40 14 68
CLEMENSSTRASSE 30
TELEFON: (089) 34 50 67
TELEGRAMM/CABLE: INVENT MÜNCHEN
TELEX: 5-29 686

Q 867 M1

SORTIMAT Creuz & Co. GmbH

D-7057 Winnenden (Württ.)

Patentansprüche

1.    Verfahren zum Anbringen einer Hartmetallplatte in einem
Schlitz am Kopf eines Spiralbohrers durch Einstellen des
Schlitzgrundes am Spiralbohrer auf eine vorgegebene Höhe und
Ausrichten des Schlitzes auf eine vorgegebene Winkelstellung,
Einsetzen der Hartmetallplatte im Schlitz unter Festlegung
an einem Vorsprung am Kopf des Spiralbohrers, und gegebenenfalls Befestigen der im Schlitz festgelegten Hartmetallplatte mittels im Schlitz eingebrachten Hartlots, dadurch
g e k e n n z e i c h n e t ,
daß der Spiralbohrer unabhängig von seinem Durchmesser in
derselben Achslage gehalten wird,
und daß nach dem Einsetzen der Hartmetallplatte im Schlitz
des Bohrerkopfes am radial innenliegenden Rand des Schlitzes
punktartig um ein die Hartmetallplatte im Schlitz festlegendes Maß eingekerbt wird.

POSTSCHECKKONTO: MÜNCHEN 501 75 - 809 · BANKKONTO: DEUTSCHE BANK A G  MÜNCHEN, LEOPOLDSTRASSE 71, KONTO-NR. 60.35 794

2.      Verfahren nach Anspruch 1, dadurch gekennzeichnet, daß an beiden radial innenliegenden Rändern des Schlitzes eingekerbt wird.

3.      Verfahren nach Anspruch 1 oder 2, dadurch gekennzeichnet, daß vor dem Einsetzen der Hartmetallplattte im Schlitz an dessen radial außenliegenden Rand vorgekerbt wird, derart, daß die Schlitzweite an den vorgekerbten Stellen nur etwas geringer als die Stärke der einzusetzenden Hartmetallplatte ist.

4.      Verfahren nach Anspruch 3, dadurch gekennzeichnet, daß an beiden radial außenliegenden Rändern des Schlitzes vorgekerbt wird.

5.      Verfahren nach einem der Ansprüche 1 bis 4, dadurch gekennzeichnet, daß die Hartmetallplatte beim Einsetzen in den Schlitz bis zum Aufsetzen auf den Schlitzgrund an ihren beiden Schmalseiten geführt wird.

6.      Verfahren nach einem der Ansprüche 1 bis 5, dadurch gekennzeichnet, daß die axiale Lage der Hartmetallplatte im Schlitz nach Kerbung der radial innenliegenden Ränder des Schlitzes nachgestellt wird.

7.      Vorrichtung zum Ausführen des Verfahrens nach einem der Ansprüche 1 bis 6 mit einem an verschiedene Arbeitsstationen taktweise vorbeibewegbaren Führungselement mit Aufnahmelöchern, durch die Spiralbohrer in vertikaler Lage steckbar sind,
mit einem höheneinstellbaren Auflager für die Schaftenden der im Führungselement eingesteckten Spiralbohrer,
mit einer am Schaft des Spiralbohrers nachgiebig angreifenden Halterung,
mit einer in den Schlitz am Bohrerkopf bei bestimmter Winkelstellung desselben einrastenden, die Einspannkraft des Halters überwindenden und in vorbestimmter Winkellage abstoppbaren Dreheinrichtung,

mit einem Sortierkessel zum lagerichtigen Zuführen von Hartmetallplatten über eine Förderschiene,

mit einer Einlegeeinrichtung zum Einsetzen einer im Einlaufstück der Förderschiene bereitstehenden Hartmetallplatte in den Schlitz am Bohrerkopf, und gegebenenfalls mit einer Hartlötstation,

dadurch g e k e n n z e i c h n e t , daß die Halterung ein achskonstantes und radial nachgiebiges prismatisches Spannfutter (68) oder Dreibackenfutter ist,

und daß im Takt hinter der Einlegestation (160) eine auf den radial inneren Rand des Schlitzes (48) im Bohrerkopf (46) ausgerichtete, vorzugsweise beidseitige (erste) Kerbeinrichtung (Wirkachsen 186) angeordnet ist.

8.    Vorrichtung nach Anspruch 7, dadurch gekennzeichnet, daß die jeweilige Wirkachse (186) der (ersten) Kerbeinrichtung schräg von oben auf den Bohrerkopf (46) gerichtet ist.

9.    Vorrichtung nach Anspruch 7 oder 8, dadurch gekennzeichnet, daß im Takt vor der Einlegestation (160) eine auf den radial äußeren Rand des Schlitzes (48) im Bohrerkopf (46) ausgerichtete, vorzugsweise beidseitige, (zweite) Kerbeinrichtung (Wirkachse(n) 140) angeordnet ist.

10.    Vorrichtung nach Anspruch 9, dadurch gekennzeichnet, daß die Wirkachse(n) 140 der zweiten Kerbeinrichtung etwa horizontal angeordnet ist bzw. sind.

11.    Vorrichtung nach Anspruch 7 oder 8, dadurch gekennzeichnet, daß die erste Kerbeinrichtung und/oder vorzugsweise die zweite Kerbeinrichtung mit mehreren vertikal übereinander angeordneten Kerbpunkten (138) versehen ist.

12.    Vorrichtung nach einem der Ansprüche 7 bis 11, gekennzeichnet durch einen beim Kerben auf den Scheitel der in den Schlitz (48) im Bohrerkopf (46) eingelegten Hartmetallplatte (62) aufdrückenden Niederhalter (188).

BAD ORIGINAL

13. Vorrichtung nach einem der Ansprüche 7 bis 12, gekennzeichnet durch eine Schnellverstellung (36, 38, 40) für das stufenlos höheneinstellbare Auflager (12).

14. Vorrichtung nach einem der Ansprüche 7 bis 13, dadurch gekennzeichnet, daß die Einspannkraft (Druckfeder 98) der Halterung (68) bei Einwirkung der Dreheinrichtung (112) auf den eingespannten Spiralbohrer (10) stufenlos herabsetzbar ist.

15. Vorrichtung nach einem der Ansprüche 7 bis 14, gekennzeichnet durch eine auswechselbare oder in der Weite verstellbare Ausbildung der Führungsschiene (152).

16. Vorrichtung nach einem der Ansprüche 7 bis 15, dadurch gekennzeichnet, daß die Einlegestation (160) einen zwischen dem Einlaufstück (154) der Führungsschiene (152) und dem Schlitz (48) im Bohrerkopf (46) hin und her bewegbaren Greifkopf (158) mit auswechselbarem Greiffutter (164) aufweist.

17. Vorrichtung nach Anspruch 16, dadurch gekennzeichnet, daß das Greiffutter (164) auch den Endanschlag (162) für das Einlaufstück (154) der Führungsschiene (152) trägt.

18. Vorrichtung nach Anspruch 16 oder 17, dadurch gekennzeichnet, daß das Greiffutter (164) eine die Hartmetallplatte (62) formschlüssig aufnehmende Ausnehmung (168) mit bis etwa zum unteren Ende der aufgenommenen Hartmetallplatte reichender Führung (170) für deren Schmalseiten sowie mit an deren Flachseiten zentriert nachgiebig angreifenden Backen aufweist.

19. Vorrichtung nach einem der Ansprüche 16 bis 18, gekennzeichnet durch ein unter dem Einlaufstück (154) der Führungsschiene (152) angeordnetes höhenbewegbares Malteserkreuz (178) mit auf unterschiedliche Formate von Hartmetallplatten (62) ausgelegten Armen (176) zum Anheben einer im Einlaufstück bereitstehenden Hartmetallplatte in das Greiffutter (164) des Greifkopfes (158).

20. Vorrichtung nach einem der Ansprüche 7 bis 19, gekennzeichnet durch eine im Takt hinter der (ersten) Kerbeinrichtung (Wirkachsen 140) angeordnete Ausrichtzange mit an den Schmalseiten der eingelegten Hartmetallplatte nachgiebig angreifenden Zentrierbacken (in Station IX).

21. Vorrichtung nach einem der Ansprüche 7 bis 19, gekennzeichnet durch Ausbildung als Schalttellermaschine (2).

22. Vorrichtung nach Anspruch 21, dadurch gekennzeichnet, daß der Schaltteller (4) zwei Tellerböden (4, 6) aufweist, die mit vertikal fluchtenden Öffnungen (8) zum Einstecken je eines Spiralbohrers (10) versehen sind, daß das Auflager ein unter dem unteren Tellerboden (4) höheneinstellbarer weiterer Teller (12) ist, und daß die Halterung (68) zwischen den beiden Tellerböden (4, 6) angeordnet ist.

FIG.1

FIG.3

FIG.3A

FIG.3B

FIG.4

FIG.5

FIG.2

FIG.6

FIG.6A

FIG.6B

FIG.6C

FIG.7